(19) Europäisches Patentamt
European Patent Office
Office européen des brevets

(11) Veröffentlichungsnummer: **0 418 703 A2**

## (12) EUROPÄISCHE PATENTANMELDUNG

(21) Anmeldenummer: **90117437.5**

(22) Anmeldetag: **11.09.90**

(51) Int. Cl.5: **B60C 11/14**

(30) Priorität: **20.09.89 DE 3931279**

(43) Veröffentlichungstag der Anmeldung:
**27.03.91 Patentblatt 91/13**

(84) Benannte Vertragsstaaten:
**AT BE CH DE DK ES FR GB GR IT LI LU NL SE**

(71) Anmelder: **Engel, Rudolf**
**Michael-Steinherr-Strasse 17**
**W-8904 Friedberg(DE)**

(72) Erfinder: **Engel, Rudolf**
**Michael-Steinherr-Strasse 17**
**W-8904 Friedberg(DE)**

(74) Vertreter: **Munk, Ludwig, Dipl.-Ing.**
**Patentanwalt Prinzregentenstrasse 1**
**W-8900 Augsburg(DE)**

(54) **Vorrichtung zur Verbesserung der Winter-Laufeigenschaften von Fahrzeugreifen.**

(57) Bei einer Vorrichtung zur Verbesserung der Winter-Laufeigenschaften von Fahrzeugreifen mit in den Rillen (7) des Laufflächenprofils angeordneten Eingriffskörpern (8) läßt sich dadurch eine hohe Lebensdauer der Eingriffskörper (8) erreichen, daß diese bei Bedarf aus einer in den Rillen (7) des Laufflächenprofils versenkten Stellung über die Oberfläche der Lauffläche ausgefahren werden können und umgekehrt.

FIG 1

EP 0 418 703 A2

# VORRICHTUNG ZUR VERBESSERUNG DER WINTER-LAUFEIGENSCHAFTEN VON FAHRZEUGREIFEN

Die Erfindung betrifft eine Vorrichtung zur Verbesserung der Winter-Laufeigenschaften von Fahrzeugreifen mit in den Rillen ihres Laufflächenprofils angeordneten, vorzugsweise als rostartiger Verband von mehreren, jeweils Seinen Profilstollen umgreifenden Ringen ausgebildeten Eingriffskörpern.

Vorrichtungen dieser Art sind aus der DE-A 26 06 703 bzw. 26 48 863 bekannt. Bei diesen bekannten Anordnungen sind die Eingriffskörper am Laufflächenprofil fixiert. Die Eingriffskanten der Eingriffskörper kommen daher unabhängig von den Straßenverhältnissen dauern zum Ein griff mit der Fahrbahnoberfläche. Diese ist jedoch erfahrungsgemäß auch im Winter die meiste Zeit schnee- und eisfrei. Bei den bekannten Anordnungen ist daher ein schneller Verschleiß der Eingriffskanten zu befürchten.

Hiervon ausgehend ist es daher die Aufgabe der vorliegenden Erfindung, eine Vorrichtung eingangs erwähnter Art mit einfachen und kostengünstigen Mitteln so zu verbessern, daß die Eingriffskörper bedarfsgerecht in und außer Fahrbahneingriff gebracht werden können.

Diese Aufgabe wird erfindungsgemäß dadurch gelöst, daß die Eingriffskörper, deren Höhe höchstens der Profiltiefe entspricht und die in bezüglich der Reifenachse radialer Richtung verschiebbar angeordnet sind, über seitliche Arme an der den zugeordneten Reifen aufnehmenden Felge abgestützt und mittels wenigstens einer, einem ihrer Arme zugeordneten Betätigungseinrichtung in radialer Richtung verschiebbar sind.

Diese Maßnahmen gewährleisten eine hohe Schonung der Eingriffskanten der Eingriffskörper und stellen daher eine lange Lebensdauer dieser Eingriffskörper sicher. Dennoch gewährleisten die erfindungsgemäßen Maßnahmen die gewünschte Verkehrssicherheit bei winterlichen Straßenverhältnissen. Ein weiterer Vorteil der erfindungsgemäßen Maßnahmen ist darin zu sehen, daß die zur Betätigung der auf das Laufflächenprofil aufsteckbaren Eingriffskörper vorgesehenen, auf der Felge abstützbaren Betätigungseinrichtungen außerhalb des Reifens angeordnet sind, was eine einfache Nachrüstung vorhandener Reifen sowie eine vergleichsweise einfache Montage ermöglicht.

Vorteilhaft kann die Höhe der Eingriffskörper kleiner als die Profiltiefe sein. Hierdurch ist sichergestellt, daß die Eingriffskörper vollkommen versenkt werden können, was eine besonders hohe Schonung gewährleistet.

Eine weitere besonders zweckmäßige Maßnahme kann darin bestehen, daß im Falle rostartiger Eingriffskörper der lichte Querschnitt der einzelnen Ringe gegenüber dem jeweils zugeordneten Stollenquerschnitt für einen Schiebesitz ausreichendes Übermaß aufweist. Diese Maßnahmen ergeben nicht nur eine einfache Montierbarkeit, sondern stellen gleichzeitig auch sicher, daß zum Ein- und Ausfahren der Eingriffskörper vergleichsweise kleine Betätigungskräfte ausreichen, was sich vorteilhaft auf den baulichen Aufwand auswirkt. Außerdem gewährleisten die genannten Maßnahmen eine starke Schonung des Reifens.

In weiterer Fortbildung der übergeordneten Maßnahmen kann jeder Eingriffskörper zumindest im Bereich einer Reifenseite mehrere, vorzugsweise zwei, in Umfangsrichtung gegeneinander versetzte Arme aufweisen. Hierbei ergibt sich in vorteilhafter Weise eine zuverlässige, kippsichere Krafteinleitung. Mit Vorteil kann dabei jedem Arm eine Betätigungseinrichtung zugeordnet sein. Hierdurch wird sichergestellt, daß auf der gesamten Laufflächenbreite jeweils dieselbe Eingriffstiefe der Eingriffskanten erreicht werden kann.

Zweckmäßig kann die Felge mit umlaufenden Trägern für die Arme der Eingriffskörper bzw. die Betätigungseinrichtungen versehen sein. Dies ermöglicht eine einfache Montage und gewährleistet gleichzeitig eine zuverlässige Kraftübertragung.

Vorteilhaft kann zumindest der auf der Außenseite der Felge angeordnete Träger als an der Felge lösbar festlegbarer Ring ausgebildet sein. Auf diesem Ring können die Betätigungseinrichtungen in vorteilhafter Weise vormontiert werden, so daß sich eine einfach Endmontage ergibt. Gleichzeitig ermöglicht diese Maßnahme eine Unterbringung der Betätigungseinrichtungen in einem durch die Anlaufkanten des Reifens geschützten Bereich, so daß auch die äußeren Betätigungseinrichtungen nicht gefährdet sind.

Gemäß einer weiteren Fortbildung der übergeordneten Maßnahmen kann zumindest der innere Träger als an die Felge angeformter Ring, zweckmäßig als Verlängerung einer Randleiste des Felgenhorns, ausgebildet sein. Diese Ausführung ergibt einen besonders geringen baulichen Aufwand bei von Anfang an für eine Ausstattung mit der erfindungsgemäßen Vorrichtung vorgesehenen Fahrzeugrädern.

Eine weitere vorteilhafte Maßnahme kann darin bestehen, daß die umlaufenden Träger mit einem die auf ihnen aufgenommenen Betätigungseinrichtungen zumindest teilweise abdeckenden Schutzflansch versehen sind. Hierdurch wird sowohl einer Verschmutzung als auch einer Beschädigung der Betätigungseinrichtungen zuverlässig vorgebeugt.

In weiterer Fortbildung der übergeordneten Maßnahmen können die Betätigungseinrichtungen zumindest teilweise als mittels eines vorzugsweise hydraulischen Druckmittels betätigbare Zylinder-Kolbenaggregate ausgebildet sein. Hierbei handelt es sich nicht nur um besonders bewährte und robuste, sondern auch um besonders kostengünstige Bauteile. Gleichzeitig ermöglicht eine derartige Ausführung in vorteilhafter Weise die vergleichsweise einfache Bewerkstelligung einer zentralen Betätigung, was eine hohe Bedienungsfreundlichkeit gewährleistet.

Zur Erzielung einer automatischen Aktivierung der Betätigungseinrichtungen kann vorteilhaft ein auf dem Fahrzeug angeordneter Eissensor vorgesehen sein, mittels dessen die Betätigungseinrichtungen aktivierbar sind. Diese Maßnahme ergibt eine besonders hohe Bedienungsfreundlichkeit und Sicherheit.

Weitere vorteilhafte Ausgestaltungen und zweckmäßige Weiterbildungen der übergeordneten Maßnahmen ergeben sich aus den restlichen Unteransprüchen sowie der nachstehenden Beschreibung eines Ausführungsbeispiels anhand der Zeichnung.

In der Zeichnung zeigen:

Figur 1 einen Radialschnitt durch ein mit dem erfindungsgemäßen Vorrichtung versehenes Kfz-Rad,

Figur 2 eine perspektivische Ansicht eines bevorzugten Eingriffskörpers und

Figur 3 eine schematische Ansicht einer Ausführung mit Eissensor.

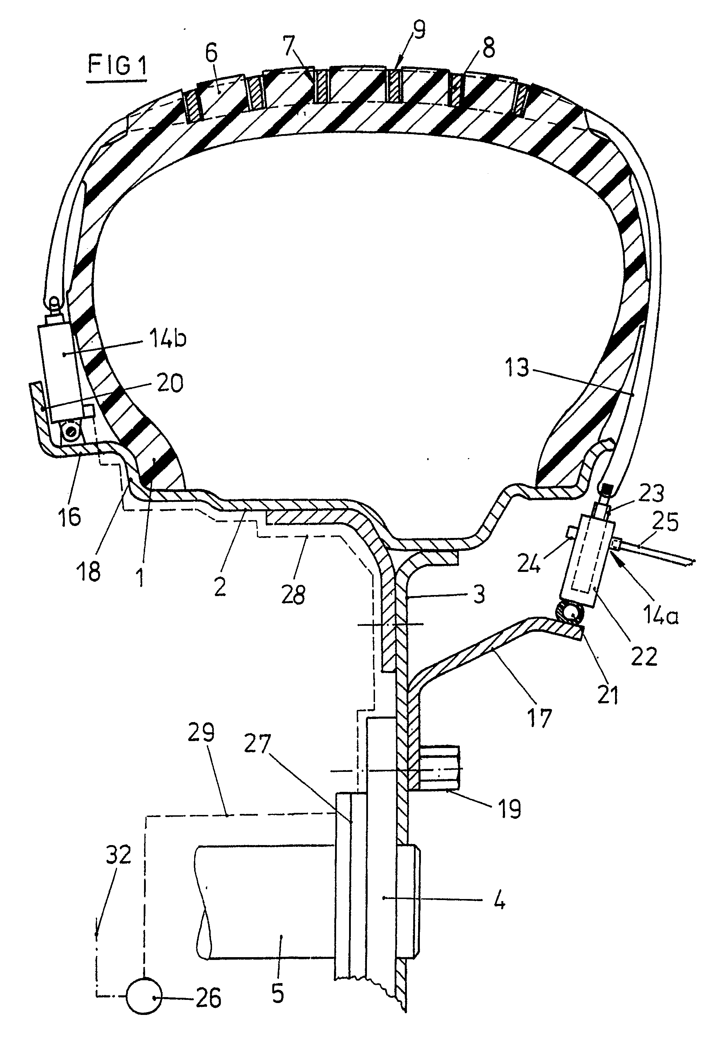

Das der Figur 1 zugrundeliegende Fahrzeugrad umfaßt einen als Vulkanisationsformling hergestellten Reifen 1, der auf einem im Querschnitt tellerförmigen Felgenring 2 aufgenommen ist. Der Felgenring 2 ist an einem scheibenförmigen Felgenkörper 3 befestigt, der hier an einer Radnabe 4 festlegbar ist, die von einer angetriebenen Welle 5 getragen wird. Im Bereich der Lauffläche ist der Reifen 1 profiliert. Dieses Profil umfaßt Stollen 6 und zwischen diesen verlaufende Rillen 7.

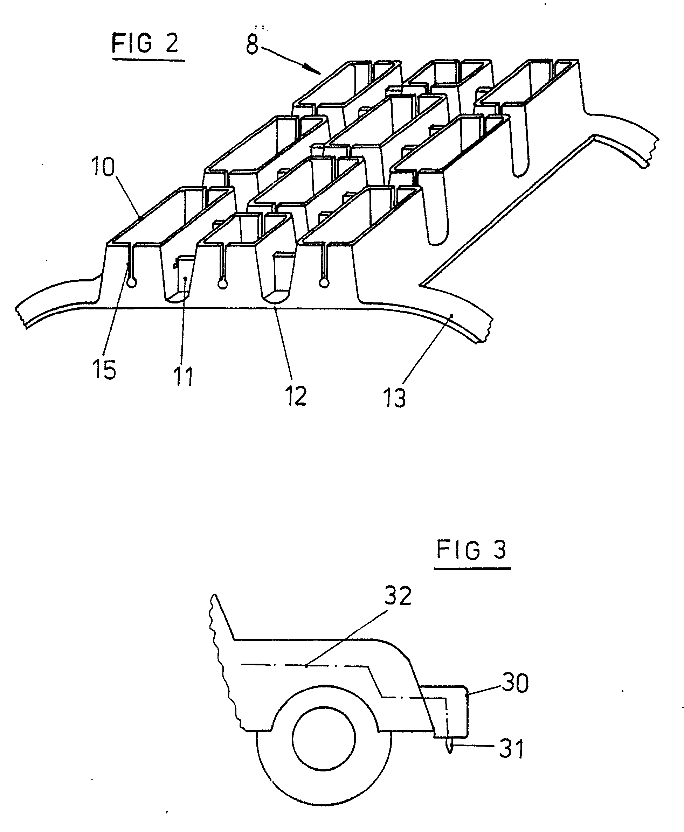

Zur Verbesserung der Winter-Laufeigenschaften sind in die Rillen 7 eingelegte Eingriffskörper 8 vorgesehen, deren radial äußere Kanten mit der Fahrbahn zum Eingriff bringbare Eingriffskanten 9 bilden. Die hier vorgesehenen Eingriffskörper 8 erstrecken sich über die ganze Reifenbreite und über einen Teil des Reifenumfangs. Der der Figur 2 zugrundeliegende Eingriffskörper 8 besteht seinerseits aus mehreren, jeweils einen Stollen 6 umgreifenden Ringen 10, die durch Stege 11 so miteinander verbunden sind, daß sich ein rostartiger Träger 12 ergibt. Diese erstrecken sich jeweils über einen Bogenwinkel von etwa 15° bis 30°, vorzugsweise 20°, sowie über die ganze Profilbreite, auf der Stollen 6 vorgesehen sind. Es sind dementsprechend mehrere, derartige Träger 12 am Umfang eines Reifens hintereinander angeordnet.

Die Höhe der die Stollen 6 umgreifenden Ringe und dementsprechend die Höhe der Eingriffskörper 8 ist, wie am besten aus Figur 1 erkennbar ist, im dargestellten Ausführungsbeispiel um etwa 1mm geringer als die Profiltiefe, d. h. als die Tiefe der Rillen 7. Die Eingriffskörper 8 sind dementsprechend vollständig in den Rillen 7 versenkbar was einen unnötigen Verschleiß der Eingriffskanten 9 bei nichtwinterlichen Straßenverhältnis sen vermeidet. Nur bei Bedarf, d. h. bei Schnee und/oder Eis und dergleichen, werden die Eingriffskanten 9 zum Eingriff mit der Fahrbahnoberfläche gebracht.

Hierzu sind die Eingriffskörper 8 in bezüglich der Reifenachse radialer Richtung ein- und ausfahrbar angeordnet. Die in das Laufflächenprofil einlegbaren Eingriffskörper sind hierzu, wie die Figuren 1 und 2 erkennen lassen, im Bereich ihrer beiden Seitenkanten mit jeweils zwei hier im Bereich der Ecken angeordneten, seitlichen Armen 13 versehen und mit diesen, wie die Figur 1 anschaulich zeigt, über zugeordnete Betätigungseinrichtungen 14 an der Felge, d. h. am Felgenkörper 3 oder Felgenring 2, abgestützt. Außerdem besitzen die die Stollen 6 umgreifenden Ringe 10 gegenüber den Stollen 6 so viel Übermaß, daß sich ein Schiebesitz, d. h. eine leichte Verschiebbarkeit in radialer Richtung, ergibt. Im dargestellten Ausführungsbeispiel sind die Ringe 10 zudem, wie Figur 2 zeigt, mit radialen Schlitzen 15 versehen, die eine gewisse Elastizität der Ringe 10 ergeben, so daß sich diese auch gegenüber gestauchten Stollen 6 noch ausreichend verschieben lassen.

Im dargestellten Ausführungsbeispiel sind sämtlichen Armen 13 Betätigungseinrichtungen 14 zugeordnet, die an der Felge angelenkt sind. Selbstverständlich wäre es auch denkbar, lediglich im Bereich einer Reifenseite Betätigungseinrichtungen vorzusehen und die gegenüberliegenden Arme 13 direkt an der Felge anzulenken. In einem derartigen Falle würde der Eingriffskörper 8 bei Aktivierung der Betätigungseinrichtungen praktisch um die Gelenke der betätigungseinrichtungslosen Arme gekippt.

Zur Aufnahme der Arme 13 bzw. Betätigungseinrichtungen 14 ist die Felge im Bereich der Radinnenseite mit einem umlaufenden, inneren Träger 16 und im Bereich der Radaußenseite mit einem umlaufenden, äußeren Träger 17 versehen, wie Figur 1 weiter zeigt. Hierbei kann es sich um symmetrisch zur Felgenmittelebene angeordnete Teile handeln. Im dargestellten Ausführungsbeispiel sind der innere Träger 16 und der äußere Träger 17 unterschiedlich ausgebildet. Der innere Träger 16 ist hier einfach als Verlängerung der Randleiste des inneren Felgenhorns 18 ausgebildet. Hierbei handelt es sich dementsprechend um ein an die Felge bereits angeformtes Teil. Der äußere Träger 17 ist hier als am Felgenkörper 3 lösbar festlegbarer Ring ausgebildet. Dieser kann sich vorteilhaft radial innerhalb des Felgenrings 2 befinden und in axialer Richtung nicht über die Anlaufkanten des Reifens 1 auskragen, so daß sich eine nicht über die Felgenaußenkanten vorstehende Kammer zur geschützten Unterbringung der äußeren Betätigungseinrichtungen ergibt. Der den äußeren, umlaufenden Träger 17 bildende Ring ist hier einfach mittels der Radmuttern 19 am Felgenkörper 3 festlegbar. Der innere Träger 16 ist hier mit einem die auf ihm aufgenommenen Betätigungseinrichtungen teilweise abdeckenden Schutzflansch 20 versehen. Ein ähnlicher Schutzflansch könnte auch an den den äußeren Träger 17 bildenden Ring angeformt sein.

Die den Armen 13 zugeordneten Betätigungseinrichtungen 14 können mechanisch, elektrisch oder hydraulisch bzw. pneumatisch funktionieren. Manuell betätigbare, mechanisch funktionierende Betätigungseinrichtungen kommen allerdings nur für die von außen zugängliche Reifenaussenseite in Frage. Dementsprechend sollen bei dem der Figur 1 zugrundeliegenden Ausführungsbeispiel die auf dem äußeren Träger 17 aufgenommenen, äußeren Betätigungsorgane 14a als Spindeltriebe ausgebildet sein. Diese können jeweils eine mittels eines Kugelgelenks 21 auf dem zugeordneten Träger 17 gelagerte und dementsprechend drehbar und schwenkbar angeordnete Gewindebüchse 22 aufweisen, in die eine am zugeordneten Arm 13 angelenkte oder fixierte Gewindespindel 23 eingreift. Die Gewindebüchse 22 kann mit radialen Steckzapfen und/oder -löchern 24 zur Aufnahme eines Betätigungswerkzeugs, hier in Form eines Drehstabs 25, versehen sein.

Die auf dem inneren Träger 16 aufgenommenen Betätigungseinrichtungen 14b sind hier, wie Figur 1 weiter erkennen läßt, als Zylinder-Kolbenaggregate ausgebildet, die mit Drucköl beaufschlagbar sind. Diese Zylinder-Kolbenaggregate sind mittels einer jeweils zugeordneten Druckleitung mit einer zentralen, auf dem Fahrzeug vorgesehenen Druckquelle, hier in Form einer bei 26 angedeuteten Pumpe, verbunden. Im Bereich der Felge sind die Druckleitungen als von einer im Bereich der Nabe 4 vorgesehenen Drehdurchführung 27 abgehende, zu den einzelnen Zylinder-Kolbenaggregaten führene Stichleitungen 28 ausgebildet. Zwischen Pumpe 26 und Drehdurchführung 27 kann eine gemeinsame, auf dem Fahrzeugchassis fixierte Hauptleitung 29 vorgesehen sein, von der die Stichleitungen 28 abgehen. In einer einfachen Ausführung kann es genügen, wenn die Pumpe 26 vom Fahrersitz manuell ein- und ausschaltbar ist. Bereits dies ergibt gegenüber einer manueilen Betätigung der Betätigungseinrichtungen selbst, wie in Figur 1 rechts angedeutet, eine hohe Bedienungsvereinfachung und einen hohen Bedienungskomfort. Zur weiteren Steigerung der Sicherheit kann aber auch eine automatische Aktivierung der Betätigungseinrichtungen vorgesehen sein. Hierzu kann, wie Figur 3 zeigt, ein auf dem Fahrzeug aufgenommener, hier unterhalb der vorderen Stoßstange 30 angeordneter Eissensor 31 vorgesehen sein, von dem eine Signalleitung 32 abgeht. Mittels dieser Signalleitung 32 kann die Pumpe 26 angesteuert werden, wie in Figur 1 weiter angedeutet ist.

Die Eingriffskörper 8 können als aus Leichtmetall bestehende Guß- bzw. Preßformlinge hergestellt werden. Im dargestellten Ausführungsbeispiel soll es sich um Kunststoff-Spritzgußformlinge handeln. Sofern die konstruktive Formgebung im Bereich der Arme 13 keine ausreichende Festigkeit ergeben sollte, kann diese mittels einer Faserverstärung erhöht werden. Es wäre auch denkbar, die Eingriffskörper 8 nicht als einteilige Körper herzustellen, sondern als mehrteilige Körper auszubilden, was eine spezielle Anpassung der verwendeten Werkstoffe an die jeweiligen Belastungsverhältnisse ermöglichte. In einem derartigen Fall könnten beispielsweise die Roste 12 als Kunststoff-Spritzgußformlinge und die hieran angesetzten Arme 13 als Metallformlinge ausgebildet sein.

## Ansprüche

1. Vorrichtung zur Verbesserung der Winter-Laufeigenschaften von Fahrzeugreifen mit in den Rillen (7) ihres Laufflächenprofils angeordneten, vorzugsweise als rostartiger Verband von mehreren, jeweils einen Profilstollen (6) umgreifenden Ringen (10) ausgebildeten Eingriffskörpern (8), **dadurch gekennzeichnet, daß** die Eingriffskörper (8), deren Höhe höchstens der Profiltiefe entspricht und die in bezüglich der Reifenachse radialer Richtung verschiebbar angeordnet sind, über seitliche Arme (13) an der den zugeordneten Reifen (1) aufnehmenden Felge (2, 3) abgestützt und mittels wenigstens einer, einem ihrer Arme (13) zugeordneten Betätigungseinrichtung (14) in radialer Richtung verschiebbar sind.

2. Vorrichtung nach Anspruch 1, **dadurch gekennzeichnet, daß** die Höhe der Eingriffskörper (8) kleiner als die Profiltiefe ist.

3. Vorrichtung nach einem der vorhergehenden Ansprüche, **dadurch gekennzeichnet, daß** im Falle rostartiger Eingriffskörper (8) der lichte Querschnitt der einzelnen Ringe (10) gegenüber dem Querschnitt des jeweils zugeordneten Profilstollens (6) für einen Schiebesitz ausreichendes Übermaß aufweist.

4. Vorrichtung nach einem der vorhergehenden Ansprüche, **dadurch gekennzeichnet, daß** jeder Eingriffskörper (8) zumindest im Bereich einer Reifenseite mehrere, vorzugsweise zwei, in Umfangsrichtung gegeneinander versetzte Arme (13) aufweist und daß jedem Arm (13) eine Betätigungseinrichtung (14) zugeordnet ist.

5. Vorrichtung nach einem der vorhergehenden Ansprüche, **dadurch gekennzeichnet, daß** zumindest die betätigungseinrichtungslosen Arme und/oder die Betätigungseinrichtungen (14) an der Felge (2, 3) angelenkt sind, die vorzugsweise mit umlaufenden Trägern (16, 17) für die Arme (13) versehen ist.

6. Vorrichtung nach Anspruch 5, **dadurch gekennzeichnet, daß** auf wenigstens einer Seite der Felge, vorzugsweise auf deren Außenseite, ein an der Felge lösbar festlegbarer Ring als Träger (17) vorgesehen ist, der vorzugsweise mittels der Radmuttern (19) an der Felge festlegbar ist.

7. Vorrichtung nach einem der vorhergehenden Ansprüche, **dadurch gekennzeichnet, daß** auf wenigstens einer Seite der Felge, vorzugsweise auf deren Innenseite, ein an die Felge angeformter Ring als Träger (16) vorgesehen ist, der vorzugsweise als Verlängerung einer Randleiste eines Felgenhorns (18) ausgebildet ist.

8. Vorrichtung nach einem der vorhergehenden Ansprüche bis 7, **dadurch gekennzeichnet, daß** wenigstens einer der umlaufenden Träger (16, 17), vorzugsweise beide Träger (16, 17), mit einem die auf ihm aufgenommenen Betätigungseinrichtungen (14) zumindest teilweise abdeckenden Schutzflansch (20) versehen ist bzw. sind.

9. Vorrichtung nach einem der vorhergehenden Ansprüche, **dadurch gekennzeichnet, daß** zumindest ein Teil der Betätigungseinrichtungen, vorzugsweise die im Bereich der Radaußenseite angeordneten Betätigungseinrichtungen (14a), mechanisch betätigbar sind und daß die mechanisch betätigbaren Betätigungseinrichtungen (14a) vorzugsweise als Spindeltriebe ausgebildet sind.

10. Vorrichtung nach einem der vorhergehenden Ansprüche, **dadurch gekennzeichnet, daß** zumindest ein Teil der Betätigungseinrichtungen, vorzugsweise zumindest die im Bereich der Radinnenseite angeordneten Betätigungseinrichtungen (14b), als mittels eines vorzugsweise hydraulischen Druckmittels betätigbare Zylinder-Kolbenaggregate ausgebildet sind und daß die als Zylinder-Kolbenaggregate ausgebildeten Betätigungseinrichtungen (14b) sämtlicher Reifen mit einer zentralen, auf dem Fahrzeug aufgenommenen Druckquelle (26) verbunden sind, wobei vorzugsweise im Bereich jeder Radnabe (4) eine Drehdurchführung (27) vorgesehen ist, die über eine Hauptleitung (29) mit der zentralen Druckquelle (26) verbunden ist und von der zu den einzelnen Zylinder-Kolbenaggregaten des betreffenden Rads führende Stichleitungen (28) abgehen.

11. Vorrichtung nach einem der vorhergehenden Ansprüche, **dadurch gekennzeichnet, daß** die Betätigungseinrichtungen (14), vorzugsweise die diesen zugeordnete, zentrale Druckquelle (26), mittels eines auf dem Fahrzeug angeordneten Eissensors (31) aktivierbar sind bzw. ist, der im Bereich der vorderen Fahrzeugkante, vorzugsweise unter der vorderen Stoßstange (30), angeordnet ist.

12. Vorrichtung nach einem der vorhergehenden Ansprüche, **dadurch gekennzeichnet, daß** die Eingriffskörper (8) als vorzugsweise zumindest teilweise faserverstärkte Kunststofformlinge ausgebildet sind.

FIG 1

## FIG 2

8

10

15

11

12

13

## FIG 3

32

30

31